# EUROPEAN PATENT APPLICATION

(11) **EP 4 378 554 A1**
(43) Date of publication of application: **05.06.2024**
(21) Application number: 22211261.7
(22) Date of filing: 02.12.2022
(51) Int. Cl.: B01D 11/02, C08J 11/08

(54) **A METHOD FOR THE RECYCLING OF POST-CONSUMER PLASTIC MATERIALS**

(71) Applicant: VITO NV, 2400 Mol (BE)
(72) Inventor: SPOOREN, Jeroen, 2400 Mol (BE)
(74) Representative: AWA Benelux

(57) **Abstract**

A process for the recycling of a vinyl chloride polymer material which comprises an initial level of one or more additive compounds comprises providing an aqueous acid composition comprising one or more alcohols and one or more acids, contacting the vinyl chloride polymer material and a volume of the acid composition to cause extraction of the one or more additive compounds from the vinyl chloride polymer material, wherein the acid composition forms a two-phase system with the vinyl chloride polymer material, comprising a solid phase comprising a purified vinyl chloride polymer material and a liquid phase comprising the alcohol, the water, the acid and the extracted one or more additive compounds, and separating the solid phase comprising the purified vinyl chloride polymer material and the liquid phase comprising the extracted one or more additive compounds.

## Description

### Technical field

The present invention relates to a process for the recycling of a vinyl chloride polymer material which comprises an initial level of one or more heavy metals.

The present invention also relates to a process for the recycling of a vinyl chloride polymer material which comprises an initial level of one or more additive organic compounds.

### Background art

Vinyl chloride polymers are widely used in the manufacturing of a broad range of both rigid and flexible products, such as window frames, flooring and roofing materials, piping and insulation of electrical cabling. Vinyl chloride polymers are obtainable from a polymerization reaction of vinyl chloride and are well known for their resistance to a range of chemicals, e.g. acids, bases. Properties of vinyl chloride-based polymer may be tuned by compounding, i.e. blending of the polymer with additives to improve its mechanic and physical properties and extend its potential applications.^{1,2}. A wide variety of organic and inorganic additives is available to be blended with the vinyl chloride-based polymer in varying concentrations, with the purpose of tuning material properties such as color, plasticity, wear resistance, flame retardance, etc. to the intended use of the vinyl chloride polymer.

Usually about 12% of the PVC additives are flame retardants, such as nonhalogenated phosphate esters and chlorinated paraffin.³ Antimony tri-oxide (ATO) is often used in synergy with organic flame retardants.⁴ Other inorganic flame retardants include metal hydroxides of aluminium or magnesium or aluminium oxide trihydrate.

To improve thermal stability properties of vinyl chloride-based polymer products, thermal or heat stabilizers are added. Usually they make up 0.2-5 % of the PVC additives. Typical heat stabilizers include mixed metal C8-C18 aliphatic carboxylic acid salts, comprising one or a combination of barium, calcium, cadmium and zinc ; organotin compounds ; lead salts and soaps ; calcium or zinc based fatty acid salts ; organic heat stabilisers such as alkyl/aryl phosphites, epoxy compounds, beta-diketones, amino crotonates, nitrogen heterocyclic compounds, organosulfur compounds (i.e. ester thiols), hindered phenolics, and polyols (pentaerythritols). Thermal stabilisers therefore usually comprise heavy metal compounds;

Plasticizers may make up 15-50% of a PVC formulation. By changing type and amount of plasticizer, PVC compound properties can be tailored to requirements imposed by the intended application or use. Increasing plasticizer concentration increases flexibility, decreases tensile strength, and reduces hardness. For example, rigid PVC is mainly unplasticized whereas flexible PVC contains added plasticizers to increase the plastic's flexibility. Typical plasticizers used in PVC include phthalic acid-based esters, phosphoric based esters, polyfunctional fatty acid esters.

Commercially available vinyl chloride polymers or products incorporating such polymers may thus contain a variety of organic compounds, in varying concentrations.

Due to its thermoplastic properties, PVC finds a plethora of applications in industry and it is a suitable material for being recycled at the end-of-life. However, collected plastics usually are a mixture of different types of materials, even if they can be sorted by type of plastic material (e.g. PE, PET, PVC, etc.). Vinyl chloride polymers for example often are a mixture of rigid, soft and flexible materials. Or soft vinyl chloride polymers are collected as a mixture of materials with varying degree of softness.

However, the presence of additives such as the organic and metal containing additives discussed above, inhibits the primary or secondary recycling of vinyl chloride polymers as a high-quality product, because legacy initiatives impose content to be below a certain level or because accumulating concentrations of certain additives deteriorated the plastic material's properties.

Besides this, resources for some of the metals present in plastic additives are becoming scarce. As an example, the European Commission listed antimony as a critical raw material given its increasing industrial demand and supply risk. China supplied 74% of the global production of antimony during the period 2012-2016.⁶ In the EU, antimony is mainly applied in flame retardants (43%), followed by lead-acid batteries (32%), lead alloys (14%), and to a lesser extend in plastic catalysts and stabilizers (6%) and glass and ceramics (5%). Despite the fact that plastic industry is the main user, antimony is currently only recovered on an industrial scale from waste lead acid batteries and recovery activities in plastic industry remain limited due to dispersion⁷. Novel recovery and recycling routes for antimony from secondary sources are therefore needed^{.8}.

Laboratory scale approaches to recover antimony from waste plastics focused on decomposing, pyrolyzing or incinerating waste plastics and to recover antimony or antimony trioxide from the gasses or residues thereby produced.⁸ These approaches require destroying of the polymers forming the plastic materials, in order to permit recovering of antimony. Moreover, antimony is generally found dispersed in products derived from waste plastics recycling, in waste incineration fly and bottom ashes, and in landfills..

There is thus a need for a process with which elements such as antimony can be recovered from waste plastic materials in a high recovery rate.

Zhan et al.¹¹ discloses a hydrothermal extraction process with which 87% of Sb can be recovered as SbS₃³ - and 90% of Br can be recovered as Br from ABS. The process is carried out at 220 °C for 2 h at an L/S of 10 in a solution of 20 g L⁻¹ NaOH and 50 g L⁻¹ of Na₂S. After extraction, the structure of the ABS was almost unchanged and was suitable for further recycling. Although the Sb recovery rate is high, the process requires hydrothermal reaction conditions, i.e. it is carried out at elevated temperature and pressure. However, when applying such hydrothermal conditions to PVC, de-chlorination and hydrothermal carbonisation will take place, thus leading to polymer degradation and making the polymer unsuitable for further recycling.

EP 1817366 discloses a process for recovering heavy metal compounds (Pb and Cd) from vinyl chloride polymers. The process comprises dissolving the vinyl chloride polymer in a solvent and treating the solution with an additive capable of adsorbing or of forming complexes with the Pb and Cd compound. The process disclosed in EP 1817366 however involves dissolution of the vinyl chloride polymer in a solvent, which risks to alter the polymer's properties upon re-use. Separation of the dissolved, purified polymer and the solvent is a complex and energy intensive process which may be further complicated by the presence of organic and inorganic additives contained in the vinyl chloride polymer. These additives need to be separated from the polymer and solvent respectively to permit re-use.

There is thus a need to an economical attractive process for the recycling of vinyl chloride polymer materials which makes it possible to remove additive compounds present in the vinyl chloride polymer material, in particular additives containing heavy metals and/or additive organic compounds, from vinyl chloride polymer plastic materials and to recover the vinyl chloride in a recovery rate which makes the process of interest for scaling up to an industrial scale. There is also a need to a process which is energetically favourable and does not require the use of high temperature and high pressure.

### Summary of the invention

The present invention therefore seeks to provide an economically and energetically attractive process for the recycling of vinyl chloride polymer materials in industrially interesting recovery rates, which does not require the use of high temperature and high pressure.

This is achieved according to the present invention with a process showing the technical features of the first claim.

Thereto the present invention relates to a process for the recycling of a vinyl chloride polymer material which comprises an initial level of one or more additive compounds, preferably wherein the one or more additive compounds are selected from the group consisting of heavy metals and organic compounds. The process comprises:
- providing an aqueous acid composition , one or more alcohols and one or more acids,
- contacting the vinyl chloride polymer material and a volume of the acid composition to cause extraction of the one or more additive compounds from the vinyl chloride polymer, wherein the acid composition is arranged to form a two-phase system with the vinyl chloride polymer material, comprising a solid phase comprising the purified vinyl chloride polymer material and a liquid phase comprising the alcohol, the water, the acid and the extracted one or more additive compounds,
- separating the purified vinyl chloride polymer material and the liquid phase comprising the extracted one or more additive compounds.

The inventors have surprisingly found that the process of this invention permits to extract the majority of the heavy metals present in vinyl chloride polymer plastic materials, in particular antimony (Sb), tin (Sn), zinc (Zn), lead (Pb), cobalt (Co), chromium (Cr), cadmium (Cd) but also magnesium (Mg), calcium (Ca), sodium (Na), potassium (K), aluminium (Al), barium (Ba) and phosphor (P) and mixtures of any of these. Depending on the nature of the metal, a higher or lower extraction efficiency may be achieved. High extraction efficiencies have been observed for Sb, Sn, S. Acceptable extraction efficiencies have been observed for Al, Ca, Cr, Mg, P, Pb, Si, Zn.

Moreover, for at least part of the metals listed above, significantly higher extraction rates can be achieved in comparison to prior art processes. Without wanting to be bound by this theory, the inventors assume that the presence of the alcohol in the acid composition improves the ability of the acid to penetrate the polymer matrix and to improve the accessibility to the inorganic additives embedded therein, without requiring dissolution of the polymer material. The inventors also assume that the higher extraction rate may be attributed to a pH reduction caused by the presence of the alcohol in the acid aqueous solution when compared to a same acid concentration in water. As a result of this improved accessibility and reduced acid concentration, an improved extraction of the heavy metals by the acid composition of the strong acid and alcohol may be realized.

This improved extraction may be achieved at temperatures which are significantly lower than those used in prior art processes. Besides this, the invention does not require the process to be carried out at elevated pressure, above atmospheric pressure. This energetic attractiveness in combination with the high recovery rates, underlines the economic attractivity of the process for use on industrial scale.

The inventors have further surprisingly found that despite the presence of metals which otherwise are capable of catalysing the reaction of the acid with the alcohol, the formation of such unwanted reaction products has not been observed. In particular the formation of alkylhalides or alkylchlorides has not been observed. This is an advantage as these compounds are often flammable, toxic, and carcinogenic.

The inventors have also found that the majority of the organic additive compounds are co-extracted when contacting the vinyl chloride polymer with the acid composition. The extracted organic additive compounds usually are additives contained in the vinyl chloride polymer, amongst which plasticisers and thermal stabilizers. Extraction of these organic additive compounds from the vinyl chloride polymer is important when re-use of the purified vinyl chloride polymer is envisaged, in particular when re-use is envisaged in other applications than the primary one from which the vinyl chloride polymer that is subjected to the process of this invention originates.. Extraction of the organic additive compounds minimizes the risk that the purified vinyl chloride polymer would interfere in an undesired way with the intended properties of the material with which it is mixed or incorporated. When mixing purified vinyl chloride polymer obtained from the process of this invention with virgin vinyl chloride polymer, any additives needed to achieve the desired properties can be added, while there is a minimal risk that any additives remaining in the purified vinyl chloride polymer would cause unwanted accumulation or adversely affect the properties of the mixture.

Advantageously, contacting the vinyl chloride polymer material with the acid composition may lead to a purification, e.g. extraction, of further additive compounds such as filler materials present in the vinyl chloride polymer material. Extraction of other filler materials, e.g. colorants, softeners, reinforcement material, or other fillers such as calcium oxide, may be beneficial, in particular if further use of the purified vinyl chloride polymer obtained from the process of this invention in subsequent compounding processes.

Advantageously, the process of this invention can be carried out at relatively low temperatures which do not affect the composition and structure of the vinyl chloride polymer or any organic additives present therein, while simultaneously achieving metal removal. The purified vinyl chloride polymer resulting from the process of this invention is therefore suitable for being recycled and re-used. The low temperature process presents the advantage that there is a minimal risk to degradation of organic additives that are extracted or removed from the vinyl chloride polymer. On the other hand, also the extracted one or more additive compounds, i.e. heavy metals and organic compounds, may be recovered from the acid composition using appropriate procedures.

Further, because of the low temperature process, the risk to de-chlorination and hydrothermal carbonization of the vinyl polymeric material i.e. the risk to decomposition of the vinyl chloride polymer, may be reduced to a minimum and the purified vinyl chloride polymer that may be recovered from the process of this invention is suitable for being recycled and mixed or compounded with other recycled or virgin vinyl chloride polymer for further use. Moreover it has been observed that the thermogravimetric analysis and differential scanning calorimetric properties of the purified vinyl chloride polymer are similar to those of the polymer that is subjected to the process of this invention. Also the HCN and chlorine composition of the purified vinyl chloride polymer are similar to those of the polymer that is subjected to the process of this invention.

It shall be clear to the skilled person that a vinyl chloride polymer material may be subjected to the process of this invention once, or several times until a desired level of removal of certain or all additives, including heavy metals and organic compounds, has been obtained.

In a next step, after having separated the purified vinyl chloride polymer material from the liquid phase comprising the extracted organic additive compounds and the one or more heavy metals, the individual metals may be recovered from the liquid phase using appropriate techniques for recovering each of the metals, and the organic additive compounds may be recovered as well using appropriate separation techniques. After having removed the organic additive compounds from the liquid phase, an aqueous alcohol phase remains which contains the one or more heavy metals. The one or more heavy metals may be recovered by separating the alcohol from the aqueous phase, for example by evaporation of the alcohol followed by recovering of the one or more heavy metals using appropriate techniques well known to the skilled person.

According to an embodiment of the invention, the acid composition comprises the alcohol and the acid in a volume ratio of the alcohol to the acid composition of at least 5 vol. % with respect to the total volume of the acid composition, preferably at least 7.5 vol. %, more preferably at least 8 vol. %. Within these ranges an optimal penetration of the acid composition, including the alcohol, into the polymer material may be achieved as well as a desired extraction of organic additive compounds contained in the polymeric material, such as plasticizers.

According to an embodiment of the invention, the acid composition comprises the alcohol in a volume ratio of minimum 40 vol. % with respect to the total volume of the acid composition, preferably minimum 50 vol. %, more preferably minimum 60 vol. % to ensure that the extraction efficiency of the one or more heavy metals from the vinyl polymer material may be maintained at a level which is of interest in industrial applications, and to minimize the risk to polymer degradation when acid concentrations would rise too high.

A variety of alcohols is suitable for use in the process of this invention. Suitable alcohols include one or more alcohols from the group of mono-, di- or poly- hydroxide alcohols. According to embodiments of this invention the alcohol may be a C1-C8 alkanol, or a C1-C5 alkanol, although branched alcohols may be used as well. According to embodiments of this invention suitable di-alcohols include ethylene glycol, propylene glycol, etc. Ethanol is a particularly preferred mono-alcohol because of its low boiling temperature when compared to water, which will facilitate removal of the alcohol phase and recovering of the one or more metals from the acid-aqueous phase. Besides this, ethanol has a favorable viscosity, which facilitates mixing and filtration. Higher alcohols may have a higher viscosity.

According to an embodiment of this invention, the contacting of the vinyl chloride polymer material with the acid composition to cause extraction of the at least one heavy metal from the vinyl chloride polymer is carried out at a temperature of at least 20°C, preferably at least 30°C, more preferably 40°C or more, most preferably 50°C or more. In particular the contacting of the vinyl chloride polymer material with the acid composition to cause extraction of the at least one heavy metal from the vinyl chloride polymer is carried out at a temperature of between 20 and 100°C, preferably a temperature between 30 and 90°C, more preferably a temperature between 40 and 90°C, most preferably a temperature between 50 and 85°C. The inventors have observed that the accessibility of the vinyl polymer material is optimal at temperatures equal to or above its glass transition temperature Tg. The use of a maximum temperature of 100°C permits carrying out the process at atmospheric pressure, and to thereby avoid the use of pressurized reactors.

In the process of this invention a variety of acids may be used, in particular strong acids. The acid preferably comprises one or more strong inorganic acids having a pKa value of maximum -2 in water, preferably a strong inorganic acid selected from hydrochloric acid HCI, H2SO4, HBr, HI. The acid may also comprise or one or more strong organic acids having a pKa value of maximum -1.9 in water, preferably selected from p-toluenesulfonic acid, methanesulfonic acid. The acid may further comprise one or more organic acids selected from oxalic acid, methanoic acid, acetic acid, citric acid. It shall be clear that the acid may comprise a mixture of two or more of the afore-mentioned acids. In a preferred embodiment of this invention the acid comprises HCI. In a further preferred embodiment of this invention the acid is a non-oxidising acid. The selection of non-oxidising acids assists in minimizing the risk to oxidation of organic additive compounds present in the liquid. It shall be clear to the skilled person that other non-oxidizing acids, as well as mixtures of two or more acids may be used as well.

The concentration of the acid in the acid composition, preferably HCI, may vary within some ranges, but is preferably at least 1 M and maximum 12 M, preferably at least 2 M and maximum 10 M, more preferably at least 2 M and maximum 8 M, most preferably 3.5 - 5.5 M. It has been observed that the effect of the alcohol on the reaction of the acid with the metals to be extracted varies with the acid concentration. Below a concentration of 2 M the extraction efficiency with HCI becomes unattractive for upscaling to industrially interesting levels, at 12 M extraction efficiency decreases as well. These conditions support in particular extraction of Sb and Sn. Lower acid concentrations, for example below 0.5 M or below 0.25 M, in particular below 0.1 M may be sufficient if extraction of other metals such as Zn and Pb is envisaged.

In the process of this invention, the vinyl chloride polymer material is mixed with a volume of acid composition comprising water, an acid and an alcohol, to cause extraction of the at least one heavy metal from the vinyl chloride polymer. A two-phase system is formed of a solid phase comprising the vinyl chloride polymer material and a liquid phase comprising the water, the acid, the alcohol and the extracted one or more heavy metals and the extracted one or more organic additive compounds. According to embodiments of the invention, the vinyl chloride polymer material may be mixed with the acid composition in a mass ratio of the solid polymer material to the acid composition ranging between 1:100 and 1:1, preferably 1:50 and 1:2, as defined by the mass of vinyl chloride polymer material to the total of acid and vinyl chloride polymer compound, preferably between 1:25 and 1:2, more preferably 1:10 and 1:2. This way the amount of acid and alcohol used to extract the at least one heavy metal may be balanced against the amount of polymer material to be treated, and a high extraction efficiency may be achieved while limiting the amounts of alcohol and acid used. Too high vinyl chloride polymer compound loadings may increase apparent viscosity and/or hamper processing and/or separation, such as filtration steps.

According to embodiments of this invention, the vinyl chloride polymer material may be suspended in the acid composition. Suspension may be provided by vortexing, mixing, stirring, shaking or any other suitable suspending method known in the art. Preferably, the fluid and vinyl chloride polymer compound are suspended (contacted) in a stirred batch reactor. Alternatively, or in addition, continuous systems may be employed, wherein the PVC granulates are brought in suspension. It will be appreciated that other type of reactors suitable to mix the acid composition and vinyl chloride polymer compound phases, such as fluidized bed reactors may be applicable as well.

The vinyl chloride polymer material may be contacted with a volume of the acid composition in a wide variety of forms or shapes, for example in the form of particles, flakes, sheets, pieces or parts. The vinyl chloride polymer material may have a wide variety of dimension, for example a dimension selected within a range from 100 µm to 10 mm, preferably from 100 µm to 40 mm, more preferably in a range from 500 µm to 10 mm, most preferably in a range from 1 mm to 5 mm. Expressed differently, the polymer material used in the method of this invention may contain particles the largest dimension of which is in the afore-mentioned ranges. The dimensions of the particles may be determined using any suitable method known to the skilled person, for example using scanning electron microscopy (SEM) and image analysis or laser diffraction or sieving according to ISO standard 1624.

In an embodiment of this invention, the acid composition and vinyl chloride polymer material are contacted at a time and temperature to reduce the amount of the heavy metals, in particular antimony, by at least 50%, preferably by at least 60%, more preferably by at least 75%, most preferably by at least 90 %.

According to a further embodiment of the invention, the purified vinyl chloride polymer is mixed with virgin chloride polymer to obtain a secondary vinyl chloride polymer.

The present invention is equally related to a secondary vinyl chloride polymer composition comprising virgin vinyl chloride polymer and purified vinyl chloride polymer obtained according to a method of the present disclosure.

### Brief description of the drawings

Figure 1 shows Leachability of Al and Sb as a function of reaction time at 250 °C in 1 M HCI and L/S = 10.
Figure 2A shows Leachability of Al and Sb as a function of HCI concentration at 150 °C for 2 h and L/S = 10. (bottom).
Figure 2B shows the Eh-pH diagram of 0.03 M Sb in the presence of Cl- with a varying concentration at 150 °C. The points in the figure are the average pH and Eh values measured in solution after leaching at 150 °C in 1 M (square), 2 M (circle), 4M (triangle) and 6 M (rhombus) HCI solution.
Figure 3 shows shows the leachability of Al and Sb at 50 °C and 80 °C in aqueous and ethanolic HCI solutions of different concentrations at L/S = 10 for 2 h.
Figure 4 shows DSC and TGA curves of the original PVC sample and the residue obtained after leaching in 4 M ethanolic HCI solution at 80 °C for 5 h.
Figure 5 shows XRD diffractogram of the precipitate. In-situ XRD upon heating the sample to different temperatures was performed. The red question marks indicate diffraction peaks which could not be assigned to known mineral phases of the ICDD Powder Diffraction database.
Figure 6 shows X-ray diffractrogram of the obtained precipitate. All observed diffraction peaks can be assigned to the Sb4Cl2O5 mineral phase (space group P21/c (a = 6.24 Å, b = 5.11 Å, c = 13.53 Å, β = 97.20°)).

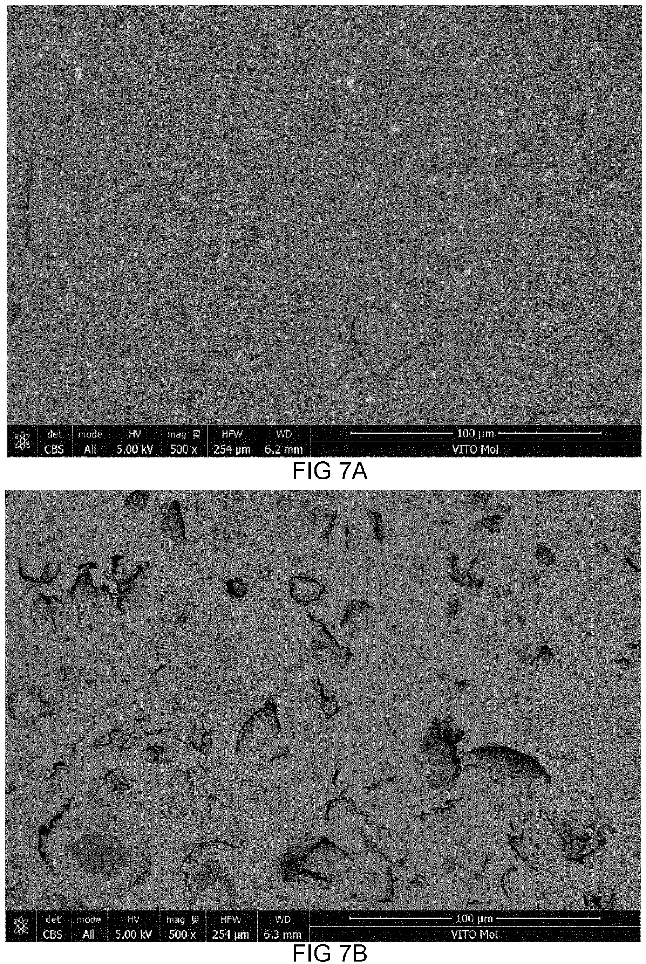

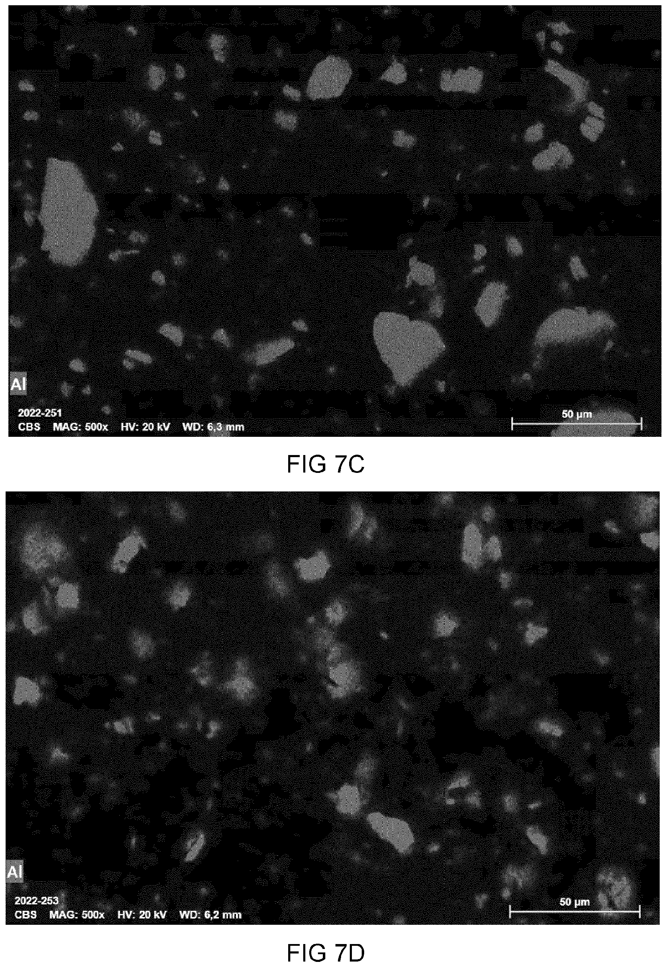

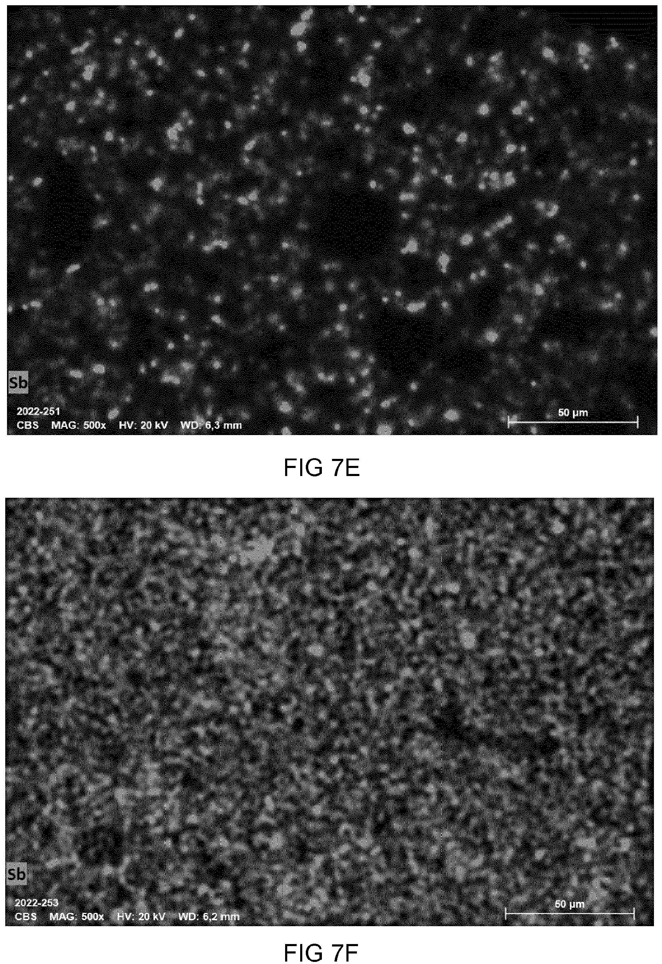

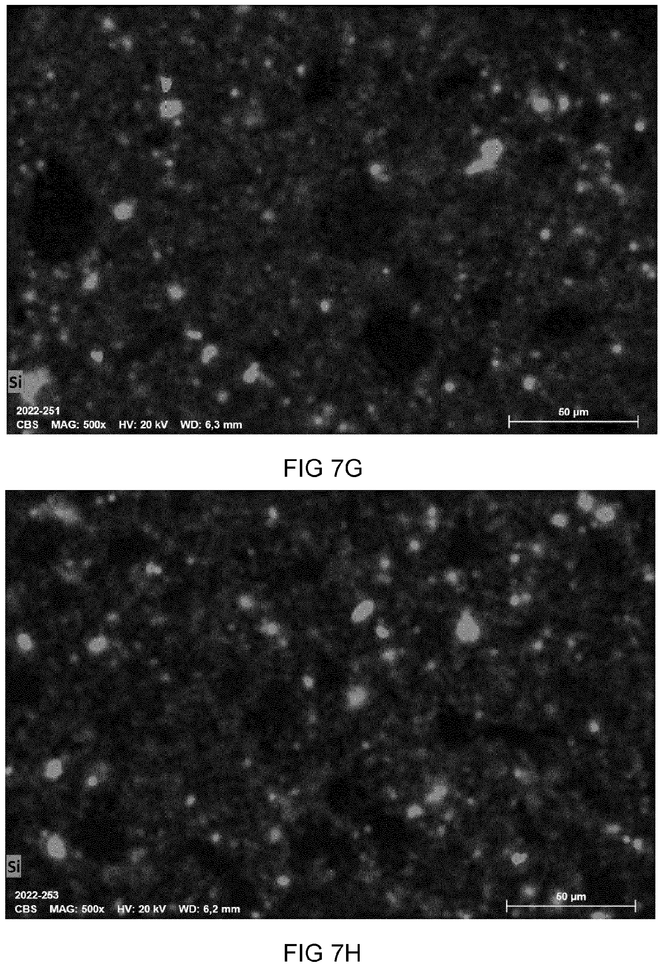

Figure 7A shows a SEM image of untreated PVC material. Figure 7B shows a SEM image of PVC material leached for 4 h at 80 °C in ethanolic 4 M HCI. Figure 7C shows an EDX image for Al of the PVC material of Fig. 7A. Figure 7D shows an EDX image for Al of the PVC material of Fig. 7B. Figure 7E shows an EDX image for Sb of the PVC material of Fig. 7A. Figure 7F shows an EDX image for Sb of the PVC material of Fig. 7B; the intense colouring for Sb in the EDX picture is mainly due to background noise and not the actual presence of Sb. Figure 7G shows an EDX image for Si of the PVC material of Fig. 7A. Figure 7H shows an EDX image for Si of the PVC material of Fig. 7B.
Figure 8 shows the TGA-DSC analysis of the PVC starting material.
Figure 9 shows the Gibbs free energy for the reaction Sb₂O₅ + 3HCl → 2SbCl₃ + 3H₂O, as modelled by HSC Chemistry 8 software.
Figure 10 shows DSC and TGA curves of the original cryogenically milled PVC sample and the residue obtained after leaching in 4 M ethanolic HCI solution at 80 °C for 4 h.
Figure 11 shows the leachability of Al and Sb as a function of reaction temperature in aqueous 1 M HCI or 4 M HCI solutions at L/S = 10 for 2 h.

### Detailed description

Terminology used for describing particular embodiments of the invention is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise, it will be understood that when a connection between structures or components is described, this connection may be established directly or through intermediate structures or components unless specified otherwise.

Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context. For the purpose of clarity and concise description, features are described herein as part of the same or separate embodiments, however, it will be appreciated that the scope of the invention.

Vinyl chloride polymer material that has been subjected to the process of this invention may be referred to as purified vinyl chloride polymer, extracted vinyl chloride polymer or recycled vinyl chloride polymer, or any other equivalent wording. Purified vinyl chloride polymer material that has been subjected to the process of this invention may contain a reduced level of organic additive compounds and/or metal ions relative to the vinyl chloride polymer material to be subjected to the process of this invention.

It will be appreciated that the process described herein for recycling vinyl chloride polymer compounds may be particularly useful for recycling of post-consumer PVC products. Accordingly, the vinyl chloride polymer compound is preferably provided from granulated postconsumer PVC products.

Advantageously, the invention may be applied to reduce the level of a broad range of additives presently used in vinyl chloride polymer compounding, for example thermal stabilizers, plasticizers, softeners, reinforcement materials, colorants, any other additives containing heavy metal ions, in particular antimony (Sb), tin (Sn), zinc (Zn), lead (Pb), cobalt (Co), chromium (Cr), cadmium (Cd) but also magnesium (Mg), calcium (Ca), sodium (Na), potassium (K), aluminium (Al), barium (Ba) and phosphor (P) and mixtures of any of these.

The major metals contained in presently used stabilizers are lead (Pb), barium (Ba), calcium (Ca), cadmium (Cd), zinc (Zn) and tin (Sn). Although the use of cadmium stabilizers is presently limited, products comprising such stabilizers are still in use and may be purified according to the invention to allow recycling of the vinyl chloride polymer material. Heat stabilizers for vinyl chloride polymers may be classified into Pb stabilizers, Ba-Zn stabilizers, Ca-Zn stabilizers, and Sn stabilizers. Pb stabilizers, Ba-Zn stabilizers and Ca-Zn stabilizers may be used as metallic soaps such as stearates. Sn stabilizers are typically used as organic tin (dialkyl tin compounds). Other than metallic soap, Pb stabilizers may alternatively or in addition be used as basic sulfate, basic carbonate, or basic phosphate compounds. In a preferred embodiment, the heavy metal in the heavy metal compound is selected from the group consisting of lead, cadmium, zinc, tin, barium, calcium or mixtures of any of these.

The fluid acid composition and vinyl chloride polymer compound are contacted at a time and temperature sufficient to reduce the amount of heavy metals in the vinyl chloride polymer from an initial level to a pre-defined desired level of purification. Preferably, the acid composition and vinyl chloride polymer material are contacted at a time and temperature to reduce the amount of heavy metal in the vinyl chloride polymer from an initial level by at least 50%, preferably at least 60 %, more preferably at least 75%, most preferably at least 80 %, in particular at least 90%, more in particular at least 95%, or even at least 99.9%. Any known methods in the art may be used to determine the heavy metal content in the vinyl chloride polymer compound. Particularly, XRF or acid digestion followed by ICP-MS and/or ICP-OES may be used. Advantageously, processing parameters of the method such as contact time, temperature, nature of the acid, loading, and combinations thereof may be selected to result in the formation of purified vinyl chloride polymer, wherein the level of heavy metal additive compounds is below 1 wt.%, preferably below 0.5 wt.%, more preferably below 0.1% (based on the mass of heavy metal compound relative to the total dry mass of the vinyl chloride polymer, as determined by ICP-OES).

Waste vinyl polymer material is usually available in a wide variety of shapes, depending on their original use. To achieve an efficient extraction from the entire polymer material up to interior parts of the material, the vinyl chloride polymer material may be contacted with a volume of the acid composition in the form of particles, flakes, scrap or sheets. The particles, flakes, scrap or sheets should be sufficiently large on the one hand to permit efficient separation of the solid and should be sufficiently small to permit penetration of the acid composition phase in the majority of the solid polymer.

Methods of comminuting the plastic to smaller particle sizes include but are not limited to grinding, milling, and freeze grinding/milling. It will be appreciated that size reduction may be done by any suitable size reduction method known by persons skilled in the art, e.g. in the field of size reduction methods for plastic recycling, such as size reduction methods according to the common practices of PVC recycling. Furthermore, granulating the vinyl chloride polymer compound may be beneficial in re-compounding processes that use the purified vinyl chloride polymer compound as starting material. It will be appreciated that small amounts (e.g. up to 10 mass %) or amounts typically present after common granulation processes, of particles with a dimension smaller and/or larger than the specified ranges may be processed as well. Good results have been obtained with granulates with a dimension in the specified range, e.g. approximately within a range from 100 µm to 40 mm, more preferably in a range from 500 µm to 10 mm, most preferably in a range from 1 mm to 5 mm. Purification tests have shown near complete heavy metal extraction with a contact time between 5 minutes to 8 hours, e.g. 2 hours or even 1 hour. It will be appreciated that, depending on the desired level of purification the process may be performed using different contact times, different contact temperatures, different granulate dimensions, and/or combinations thereof.

Although additional extraction steps may be considered for removing remainders of the additives and one or more heavy metals - in other words although the vinyl chloride polymer material may be subjected to the process of this invention several times - the present invention is capable of reducing a level of heavy metal compound in the purified vinyl chloride polymer (particles) to a level that allows use, e.g. re-use, of formed vinyl chloride polymer in compounding processes.

The purified vinyl chloride polymer will usually have a shape which conforms to the shape of the vinyl chloride polymer that is subjected to the process of this invention, for example the purified vinyl chloride polymer may take the shape of particles, flakes, sheets, pieces or parts or any other convenient shape.

A preferred strong acid for use in the method of this invention is an aqueous solution of HCI, may be particularly useful in processes for the purification of vinyl chloride polymer compounds wherein the at least one heavy metal compound is antimony (Sb) due to a possible formation of soluble SbCl3 or ionic antimony chloride complexes. A coloration on the surface of purified vinyl chloride polymer (so-called pinking) may be indicative of remaining heavy metal additive compounds, e.g. salts, or other additives. It will be appreciated that the coloration is not necessarily indicative for poor extraction performance or of poor product quality since coloration may be visible at very low, tolerable, e.g. trace levels of heavy metal additive compounds. On the other hand, absence of a coloration, e.g. formation of colorless (e.g. white) vinyl chloride polymer (granulates), may be indicative of successful heavy metal removal (reduction), practically for processes aimed at reducing the Pb level in vinyl chloride polymer compounds.

In an embodiment of this invention, the one or more alcohols, preferably the ethanol, may be re-used. Before being re-used, any compounds contained in the one or more alcohols, such as organic compounds and/or heavy metals, may be removed from the one or more alcohols.

In other embodiments, the acid composition may be re-used. In other words, after separating the purified vinyl chloride polymer compound from the acid phase, the acid phase may be re-used to purify a further volume of vinyl chloride polymer compound comprising a heavy metal compound. Preferably, the acid composition is re-used as long as the extraction efficiency results in a treated vinyl chloride polymer with an acceptable reduced level of the at least one heavy metal, e.g. Sb. A desired target of vinyl chloride polymer, in particular PVC compounding restricts use of Sb to maximum levels of 0.1 wt. %. Preferably, the level of a heavy metal, e.g. Sb, in purified vinyl chloride polymer does not exceed 0.3 wt. %. Optionally, vinyl chloride polymer compound materials can be prepared by compounding, e.g. mixing, suitable amounts of virgin or otherwise recovered vinyl chloride polymer with purified vinyl chloride polymer particles obtained from this invention. In such processes higher levels (e.g. double or quadruple) of some heavy metals may be acceptable, depending on the amount of virgin vinyl chloride polymer that is compounded along with the purified vinyl chloride polymer.

In some embodiments, the process of this invention additionally comprises a washing step, wherein the separated purified vinyl chloride polymer is contacted with a washing liquor, to wash residual acid phase (e.g. liquid acid phase) from the vinyl chloride polymer. Washing the purified vinyl chloride polymer may remove remaining quantities of acid adhered thereto, e.g. to the outer surface of the purified vinyl chloride polymer compound. Accordingly, washing may also wash (e.g. remove) remaining heavy metal additive compounds from the purified vinyl chloride polymer compound. It will be appreciated that the washing may be performed at temperature ranges similar to the ranges used during the extraction step of contacting the vinyl chloride polymer material and a volume of acid composition. Accordingly, washing is preferably performed at a temperature between 20 °C and 85 °C.

The purified vinyl chloride polymer compound that is recovered from the process of this invention where it has been contacted with the aqueous acid composition, may be washed with at least a first washing liquid. The washing liquid is preferably selected to have a strong interaction with the heavy metals to ensure that any metals remaining on the surface of the purified vinyl chloride polymer are removed. The washing liquid preferably has a low affinity, in particular a low solubility for the vinyl chloride polymer. The washing liquid should not cause precipitation of the heavy metals or the acid of the aqueous acid composition.

The first washing liquid may be selected from a group consisting of water, an aqueous solution of an acid. However, a particularly suitable first washing liquid comprises the aqueous acid composition comprising one or more alcohols and one or more acids used to cause extraction of the one or more additive compounds from the vinyl chloride polymer material, as this will ensure better removal of any extraction aqueous acid composition remaining on the purified vinyl chloride polymer.

The washing step may be repeated several times. Thereby, the same washing liquid may be used, e.g. the first washing liquid, but the second and any further washing steps may also be carried out using water. Good washing performance has been obtained with aqueous washing solutions, in particular water as such.

It will be appreciated that the first washing liquid used to carry out the washing preferably has low initial levels of dissolved heavy metal additive compounds, at least sufficiently low to achieve dissolution of the heavy metal contained in the acid phase adhered to the purified vinyl chloride polymer compound (granulate). Preferably, the first washing liquid may be reused until the washing performance drops, e.g. until the washed vinyl chloride polymer comprises less than 0.1 wt.% of heavy metal additive compounds, e.g. Sb compounds.

It will be appreciated that the purification process described herein for purifying vinyl chloride polymer compounds may be particularly useful for recycling of post-consumer PVC products. Accordingly, the vinyl chloride polymer compound is preferably provided from granulated post-consumer PVC products. Such products include, but are not limited to window frames, piping, roofing and/or flooring materials, soft PVC products.

According to a further aspect, the present invention relates to the use of an acid composition, to reduce a level of one or more heavy metals in heavy metal-salt stabilized PVC materials, e.g. in post-consumer PVC materials.

According to a further aspect, the present invention relates to vinyl chloride polymer, in particular vinyl chloride polymer particles, obtainable by the purification method according to the invention. Advantageously, the level of heavy metal compound in the purified vinyl chloride polymer (particles) is reduced to a level that allows use, e.g. re-use, of formed vinyl chloride polymer in compounding processes. Preferably, the level of a heavy metal in purified vinyl chloride polymer does not exceed 0.1 wt.%. More preferably, the heavy metal level does not exceed 0.01 wt.%. Without purification vinyl chloride polymer compounds may comprise significant levels of heavy metal additive compounds. For example, PVC may contain up to approximately 10 wt% of heavy metal heat stabilizing agents. In case lead stearate is used this corresponds to a Pb loading in the compound of about 3 wt%.

The invention is described more fully hereinafter with reference to the accompanying examples, in which embodiments of the invention are shown. The provided examples are not intended to be limiting in any way. Described amounts, weights and ratios, temperatures and contact times disclosed in the description above and the examples below may be rounded of and are not to be interpreted in a restrictive way. Usual uncertainty ranges apply.

### Examples.

### Materials and Methods

### Materials

A commercially available antimony containing soft PVC sheet sample was cut into uniform flakes of 1 cm x 1 cm and cryogenic- milled to <4 mm by submerging the material in liquid nitrogen prior to treatment with a Fritsch Pulverisette cutting mill that was equipped with a 4 mm sieve.

Hydrochloric acid (37 wt.% HCI in water) and n-hexane (SupraSolv^{®}, ≥98.0%) were purchased from Merck KGaA (Darmstadt, Germany), ethanol (absolute) and 2-propanol (technical grade, ≥98%) were purchased from VWR Chemicals (Fontenay-sous- Bois, France) and sodium chloride (99.5%) from Fisher Scientific Chemicals (Loughborough, UK). All chemicals were used as received without any further purification.

### Leaching optimisation experiments

Pressure leaching above 100 °C was performed in general purpose acid digestion reactor vessels 4744 of Parr Instrument Company. The PVC samples (2 g) were introduced into the acid digestion vessels together with 20 mL of an aqueous hydrochloric acid solution. The reaction vessels were closed and heated in an oven at a set reaction temperature for a chosen reaction time. Next, the vessels were removed from the oven and left to cool to room temperature, after which the reactors were opened, and the reduction potential and the pH of the reaction mixture were measured. Solid-liquid separation was performed by vacuum filtration using a 0.45 µm mixed cellulose ester membrane filter from Whatman. The separated Purified PVCs were washed to remove remaining reagents and the washing waters were collected separately. To ensure that no solids are present in the leachate for ICP-OES analysis, the leachates were filtered again using a 0.45 µm polyamide syringe filter from Macherey-Nagel and filtrates were diluted with 5 vol% nitric acid for preservation. The Purified PVCs were dried at 40 °C and subsequently analysed by X-ray fluorescence (XRF). All the experiments were carried out in duplicates.

For leaching in aqueous solutions at temperatures below 100°C, 2 g of PVC samples were brought into PTFE containers with 20 mL of an aqueous hydrochloric acid solution. All experiments were carried out in duplicates. The PTFE containers were sealed, and then shaken horizontally at 225 rpm for 2 h in a water bath at the set reaction temperature. After the leaching process had been terminated, the containers were removed from the water bath and cooled to room temperature. Subsequently, the same procedures were followed to recover the solid and liquid fractions as described above for the aqueous pressure leaching experiments.

For the leaching process with an organic acid composition, the experiments were carried out in round-bottom flasks equipped with a reflux condenser to prevent the evaporation of the solvent. During these experiments, an ethanolic hydrochloric acid solution was used as the acid composition whereby an aqueous 37 wt.% HCI solution was diluted with pure ethanol to obtain the desired HCI concentrations. The reaction mixture in the flask was heated for 2 h in a water bath at the needed reaction temperature. After the leaching process, the round-bottom flasks were cooled down to room temperature, after which the reduction potential and the pH of the liquid phase were measured. After the leaching process, the solid precipitate was separated by using a 0.45 µm polyamide syringe filter from Macherey-Nagel. The residues from the PVC after chemical leaching were subsequently dried at 40 °C. Since ICP-OES analysis of the liquid fraction was carried out with aqueous standards, the ethanol present in the leachates needed to be removed by rotary evaporation. Once the ethanol was removed from the sample, the leachates were diluted to 20 mL with ultra- pure water. Subsequently, 5 vol% nitric acid was added for preservation. The solid residues were dried at 40 °C and analysed by XRF.

### Antimony recovery optimisation

A bigger scale leaching experiment was performed in a 1 L round-bottom flask, placed in a heating mantle, and equipped with a reflux condenser. The flask was filled with 50 g of PVC sample (1x1 cm flakes) and 500 mL of a 4 M HCI ethanolic solution. The reaction mixture was heated to 80 °C for 5 hours. After cooling to room temperature and filtration, the recovered leaching solution was divided in two equal fractions of the same volume (235 mL); FR1 and FR2.

Ethanol was removed from FR1 through rotary evaporation (130 mbar, 55 °C). Whereas FR2 was not treated by evaporation. Subsequently, to a known volume of FR1 and FR2 MilliQ water was added stepwise by means of a graduated burette at room temperature and under constant stirring by means of a magnetic stirring bar. The pH of the solution was measured after each water addition step. Water was added until the formation of a precipitate could be observed, after which the solution was left to stir for an additional 1 h. Next, the slurry obtained for FR1 was filtered over a 0.45 µm mixed cellulose ester membrane filter (Whatman) to recover the precipitate, whereas for the FR2 solution the solid was recovered through centrifugation (5 min, 3500 rpm). The solid residues were dried at 40 °C in a nitrogen atmosphere until constant mass. The obtained liquid fractions were analysed by ICP-OES and the solid resides by XRD and by ICP-OES after acid digestion.

### Process validation experiment

A cryogenic-milled PVC sample (50 g) was brought in a 1 L round bottom flask to which 500 mL of a 4 M HCI ethanolic solution was added. The flask was equipped with a condenser and heated by a heating mantle to 80 °C and left to react for 4 h under mild stirring (150 rpm). After cooling to room temperature, the reaction mixture was filtered over a Whatmann cellulose filter to remove the solid purified PVC. The purified PVC was washed over the filter with additional ethanol that was added to the collected filtrate. The purified PVC was dried at 50 °C and subsequently analysed by TGA-DSC, DART-MS and ICP-OES (after acid digestion). Ethanol was removed from the filtrate by rotary evaporation (150 mbar, 55 °C). Subsequently, the aqueous acid composition was washed twice with 50 mL n-hexane in a separatory funnel. The n-hexane solution was collected for DART-MS analysis and the aqueous fraction was collected in a flask. An oily layer stuck to the separatory funnel was washed off by 2-propanol, which was collected for DART- MS analysis. To the washed aqueous leaching solution, known volumes of MilliQ water were stepwise added under constant stirring until a precipitate was observed. After which, an additional 100 mL of MilliQ water was added and left to stir for an additional 1 h. The precipitate was filtered off over a Whatmann membrane filter (0.45 µm) and the filtrate was collected for ICP-OES analysis. The precipitate was dried at 50°C and subsequently analysed by XRD, XRF and ICP-OES (after acid digestion).

### Analysis methods

A PerkinElmer Avio 500 optical emission spectrometer with prepfast was used for the ICP-OES analysis. The aqueous samples were stabilized with 5 vol% HNO3 prior to ICP-OES analysis. Solid samples underwent acid digestion prior to ICP-OES analysis, whereby the sample was dissolved in an HNO3/H2O2/HCl solution and microwave digested under high pressure at 250 °C for 180 minutes.

X-ray fluorescence (XRF) analysis on solid samples were performed by a Thermo Scientific Niton XL3t GOLDD+ handheld XRF analyzer.

For the thermogravimetric- and differential scanning calorimetry analysis of PVC samples a NETZSCH STA 449 F3 Jupiter simultaneous thermal analyzer was used.

X-Ray Diffraction (XRD) using a PANalytical Empyrean Diffractometer (Co anode) was performed to determine the crystallographic phase composition of the obtained precipitates. HighScore Plus software was used for qualitative analyses of the diffractograms.

DART-MS measurements were performed by a Thermo Scientific^{™} Q Exactive. DART was used with Helium gas at a run temperature of 450 °C to qualify additives present in the PVC samples as well as in organic liquid phases. Measurements were performed in positive and negative ion mode, whereby liquid samples were pick up with a glass capillary whereas solid PVC samples were held in front of the DART using tweezers.

SEM analysis was performed on cryogenic-milled PVC sample and Purified PVC after leaching by a FEI NOVA NANOSEM 450 platform, equipped with a BRUKER QUANTAX 200 SDD detector for EDX analysis. Before electron microscopy, the samples were embedded in Epofix resin, polished and Pt-coated.

Thermodynamic modelling was performed by means of HSC Chemistry 8 software.

### Characterisation of the starting material

The PVC starting material was extensively characterized to gain an accurate insight in its composition. The average concentration of inorganic elements was determined by ICP- OES analysis of 5 subsamples of the investigated PVC material. The inorganic elements with the highest concentrations were antimony (3.8 wt.%) and aluminium (3.3 wt.%). Therefore, these two elements will be followed up to allow for comparison between their leaching efficiencies. Antimony is generally present in plastics as antimony tri-oxide (ATO) (Sb2O3), whereas the presence of aluminium can be assigned to its presence as aluminium tri- hydroxide (ATH) (AI(OH)3), which is a commonly used filler material in plastics.

A DART-MS analysis on the starting material could derive qualitatively the presence of the following organic additives in the PVC material: Phosflex 362^{®} (2-ethylhexyl diphenyl phosphate), dioctyl phthalate and diethyl phthalate, along with SbCl₃OH, FeCl₃, FeCl₄ and some other trace compounds with unknown composition (m/z 372 and 451).

**Table 1: PVC Elemental composition, average of 5 samples measured by ICP-OES.**

| Element | Concentration (mg kg-1) | Element | Concentration (mg kg-1) |
|---|---|---|---|
| Al | 32500 ± 6100 | Pb | 680 ± 11 |
| Ca | 172 ± 18 | S | 540 ± 88 |
| Cr | 157 ± 19 | Sb | 38200 ±1500 |
| K | 170 ± 37 | Si | 1720 ± 270 |
| Mg | 95.6 ± 9.8 | Sn | 542 ± 77 |
| Na | 1220 ± 170 | Zn | 356 ± 40 |
| P | 1130 ± 170 | | |

The material was analysed for its N, C, H and S content, which were 0.20 wt%, 42.84 wt%, 6.37 wt% and 0.23 wt%, respectively. Finally, the chloride content was 22 wt%. The comparison between the H:C molar ratio of fresh and treated PVC provides an indicative measure of its dichlorination rate, as H:C = 1.5 for pure PVC and 2 or 1 for its polyol or polyene dechlorinated products, respectively. The H:C molar ratio of the investigated starting material equaled 1.8.

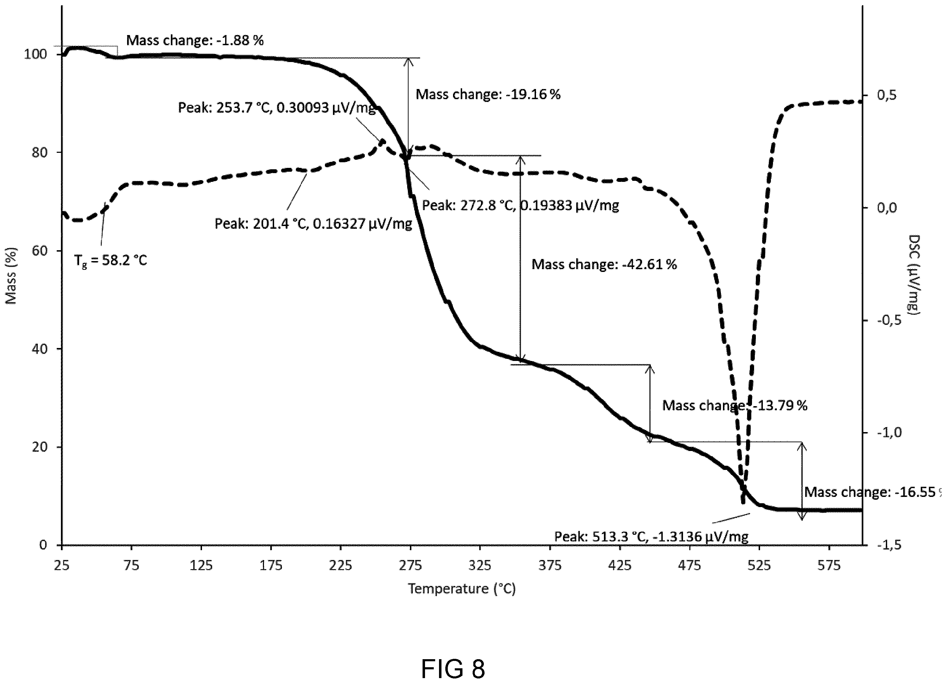

Measurements of the thermal behaviour by TGA-DSC in air of the investigated PVC sample showed a glass transition temperature at 58.2 °C and decomposition in air starting at about 200 °C and proceeding very fast at 272 °C (Figure 8). At 513 °C a strong exothermic peak was observed, indicating the pyrolysis of the organic material.

### Aqueous chloridic leaching.

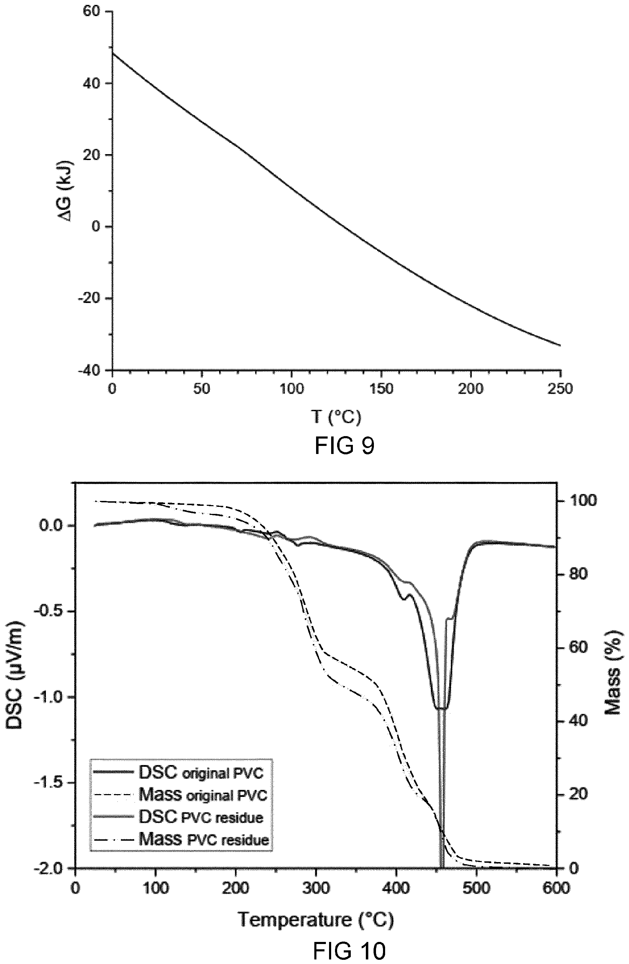

Explorative experiments by the inventors have shown that leaching of inorganic additives from waste PVC in 1 M HCI at 250 °C for 24 h in a closed reactor was possible. Under such conditions the PVC dechlorinated, whereas for a shorter reaction time of 2 h less de-chlorination occurred, and a similar extraction yield of inorganic elements was obtained. These reaction conditions were chosen as a starting point for this study. A fixed liquid to solid ratio (L/S) of 10 was chosen. HCI leaching of Sb₂O₃ generally occurs via the formation of soluble SbCl₃, according to reaction eqn (1). This reaction is thermodynamically favoured above about 130 °C (Figure 9) and the formation of SbCl₃ requires high chloride concentrations and very low pH according to Eh-pH diagrams. The stability of SbCl3 in solution thus expands to higher pH upon increasing the chloride concentration or the temperature:

Sb₂O₃ + 3HCl → 2SbCl₃ + 3H₂O (1)

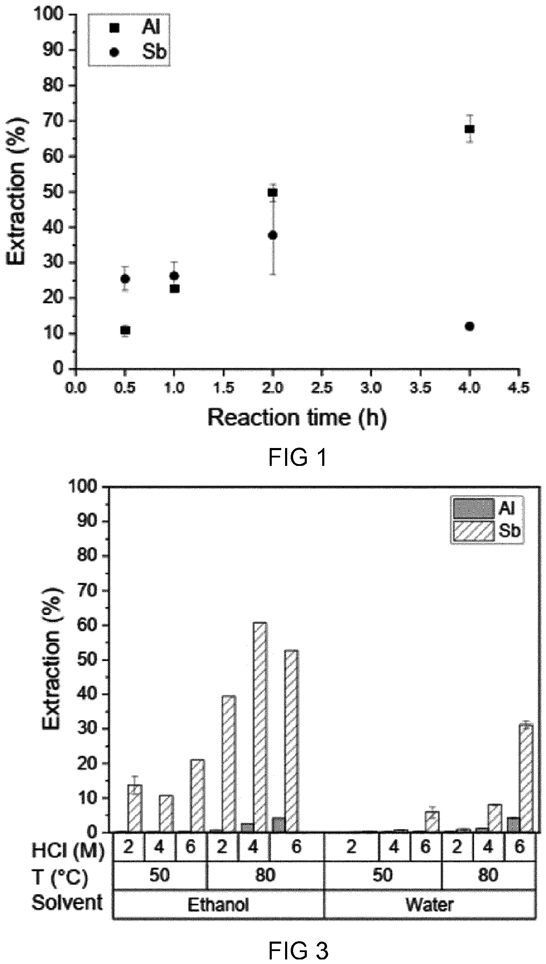

Firstly, the influence of leaching time at 250 °C was investigated. Figure 1 shows an increase of the Al leachability with time, whereas the leachability of Sb reached a maximum at 2 h, after which the leachability decreased at 4 h leaching. Such decrease could be explained by the instability of antimony chloride complexes under the chosen reaction conditions (1 M HCI), whereby SbCl3 hydrolyses with water to precipitate as antimony oxychlorides, as shown by Chae et al. (2020). Upon increasing the reaction time at 250 °C, the dechlorination of the PVC polymer increased as the H:C molar ration decreased from 1.8 (starting material) to 1.06 ± 0.01 after 2 h of reaction. Likewise, the chloride concentration dropped to 6.9 ± 0.1 wt.%. It was also observed that the plastic became brittle and blackened. Nevertheless, at shorter reaction times of 0.5 h and 1 h, less de-chlorination took place as the H:C molar ratios of the residues were, respectively, 1.56 ± 0.02 and 1.43 ± 0.00 and the chloride concentrations 30 ± 4 wt.% and 31 ± 2 wt.%.

Figure 1 shows Leachability of Al and Sb as a function of reaction time at 250 °C in 1 M HCl and L/S = 10.

As it was aimed to avoid PVC de-chlorination, the reaction temperature of 250 °C was unsuitable. Thus, a higher HCI concentration was applied at lower temperature to reach efficient antimony extraction. A moderate reaction temperature of 150 °C was chosen to investigate the effect of HCI concentration.

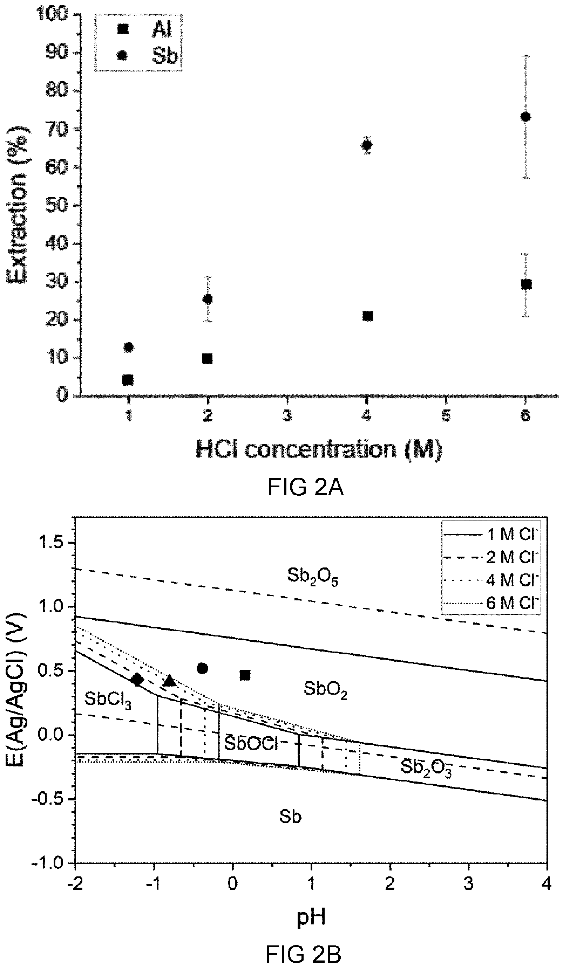

Increasing the HCI concentration had a positive effect on the antimony leachability (Figure 2A). Thermodynamic modelling showed that the stability region of SbCl3 at 150 °C expanded towards higher pH upon increasing the chloride concentration from 1 to 6 M (Figure 2B). Moreover, increasing the HCI concentration shifts the solution pH to lower values, allowing for the formation of stable SbCl₃. The latter pH effect is as important as the chloride concentration, as in a control experiment at 200 °C for 2 h and L/S = 10 the leachability of Sb decreased drastically from 68 ± 14% to 12 ± 1% when 4 M HCI (pH = -0.74 ± 0.2) was substituted by a 1 M HCI + 3 M NaCl solution (pH = -0.52 ± 0.7), respectively. A significant increase in antimony extraction was observed when the HCI concentration increased to 4 M, whereas a further increase to 6 M caused only a small additional increase in extraction yield.

Furthermore, the influence of reaction temperatures below and above the normal boiling point of water in the range 50 °C - 250°C were tested for 2 h reaction time at an L/S = 10 in 1 M HCI and 4 M HCI (Figure 10). In 1 M HCI the extraction of Al and Sb increased with temperature, but the maximum extraction remained limited to 38 ± 11% for Sb and 50 ± 2% for Al at 250 °C for 2 h. In 4 M HCI the antimony leaching did not significantly increase above 150 °C, whereas the leachability of aluminium increased to a maximum of 79.6 ± 0.4% at 250 °C. The mass loss of the PVC after reaction was determined and was shown to drastically increase from 225 °C onwards (i.e. 14 ± 3 wt% at 225 °C and 45 ± 4 wt% at 250 °C), indicating that decomposition occurred. Thus, for aqueous HCl leaching of antimony from PVC the mildest conditions with an optimal antimony extraction of 66 ± 2% were 4 M HCl, L/S = 10 at 150 °C for 2 h under hydrothermal conditions. Under these conditions no visually observable decomposition of the plastic took place.

In case of the above studied hydrothermal leaching system, a reaction at elevated temperature and under autogenous pressure is required, giving rise to potential engineering and economic challenges for further upscaling.

The obtained purified PVCs after leaching maintained the original shape and colour but were observed to be less flexible. The residues were analysed and their composition was compared to that of the original sample. The chloride content of the PVC dropped slightly from 22 wt.% in the original sample to 18-21 wt.% in the residues and the H:C ratio dropped from 1.8 to 1.3-1.7, respectively. No clear trend was observed for the change in chloride content and H:C ratio of the residues as a function of reaction temperature or HCI concentration in the ethanolic acid composition and the obtained values did not indicate that degradation of the PVC took place.

### Antimony recovery process optimisation

Based upon the above findings a larger scale experiment was performed whereby two different antimony recovery routes were tested after leaching.

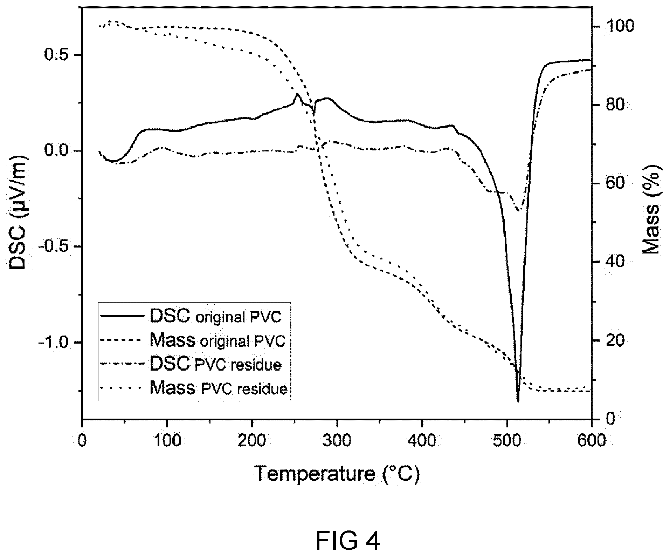

A leaching experiment was executed whereby 50 g of PVC was leached in 500 mL of an ethanolic 4 M HCI solution at 80 °C for 5 h. After reaction the pH and ORP (Ag/AgCI) of the acid composition were measured to be -0.89 and 439 mV, respectively. The plastic residue after leaching was recovered and a mass loss of 5.3 wt% was recorded. The elemental composition of the residue, shown in Table 2, indicated that about 60% of antimony was removed as well as significant amounts of phosphorous (63%), Sulphur (29%), tin (57%) and zinc (63%). Minor amounts of Ca, Cr, Mg and Na were removed, whereas the extraction percentages of Al, K, Pb and Si were very low to negligible. The solid residue had a chloride concentration of 19 wt.% and a H:C molar ratio of 1.5, indicating that no significant decomposition of the PVC took place. This was confirmed by comparison of the thermogravimetric and calorimetric behavior of the purified PVC with that of the original PVC sample, which were similar (fig. 4).

**Table 2: Elemental composition measured by ICP-OES after digestion and derived extraction yields of the purified PVC after leaching for 5 h at 80 °C in 4 M HCI ethanolic acid composition.**

| Element | Concentration (mg kg-1) | Extraction (%) |
|---|---|---|
| Al | 33000 ± 1000 | 4 |
| Ca | 153 ± 6 | 16 |
| Cr | 137 ± 6 | 18 |
| K | 280 ± 20 | 0 |
| Mg | 85 ± 4 | 16 |
| Na | 1067 ± 58 | 17 |
| P | 437 ± 35 | 63 |
| Pb | 710 ± 10 | 1 |
| S | 403 ± 35 | 29 |
| Sb | 16000 ± 6200 | 60 |
| Si | 1930 ± 150 | 0 |
| Sn | 243 ± 12 | 57 |
| Zn | 240 ± 10 | 63 |

The obtained pregnant leaching solution was observed to be turbid. The leaching solution was split in two fractions, FR1 and FR2.

For FR1 ethanol was removed through evaporation upon which the color of the solution turned yellowish with an oily phase being observed on top of the aqueous phase. This indicated that likely organic additives are co- extracted during the ethanolic HCI leaching process, such as plasticisers. Ethanolic HCI leaching allows for an increased penetration of the acid composition into the polymer matrix and increases accessibility to the embedded inorganic additives, such as antimony trioxide.

The distilled FR1 (pH = -1.46) and non-distilled FR2 (pH = -1.14) were subsequently treated by gradually adding water, with the aim to perform hydrolysis of SbCl3 to precipitate antimony oxychlorides according to the below equations (2) and (3).

SbCl₃ + H2O → SbOCI + HCI (2)

4SbOCI + H2O → Sb₄O5Cl₂ + 2HCl (3)

Upon the addition of water, the pH of the solution was measured, and a precipitate was formed upon reaching a pH of 0.06 for FR1 and 0.50 for FR2. For the distilled FR1, precipitation occurred at about 7:1 V_{water}:V_{FR1} addition and the pH remained stable over time.

The precipitate was filtered off and dried at 40 °C. The recovered precipitate was rich in antimony (50 wt%) along with 0.18 wt% tin as the main metal impurity (Table 3).

**Table 3: Elemental composition measured by ICP-OES after digestion of the obtained precipitate. The Recovery is calculated based on the elemental concentrations in the starting solution FR1 and in the solution after removal of the precipitate.**

| Element | Concentration (mg kg⁻¹) | Recovery (%) |
|---|---|---|
| Al | 140 | 44 |
| Ca | 32 | 56 |
| Cr | <5 | 48 |
| K | 240 | / |
| Mg | <10 | 50 |
| Na | 25 | 36 |
| P | 4500 | 46 |
| Pb | 96 | 47 |
| S | 490 | 90 |
| Sb | 500000 | 92 |
| Si | 79 | 47 |
| Sn | 1800 | 95 |
| Zn | 15 | 42 |

The recovery rate from solution was high for S (90%), Sn (95%) and Sb (92%) and in the range of 42-56% for the other investigated elements, indicating a significant co-precipitation. However, given the low concentration of other elements in the leachate their final concentration in the precipitate remained rather low. Nevertheless, further purification of the antimony product is required to make it suitable for commercial use.

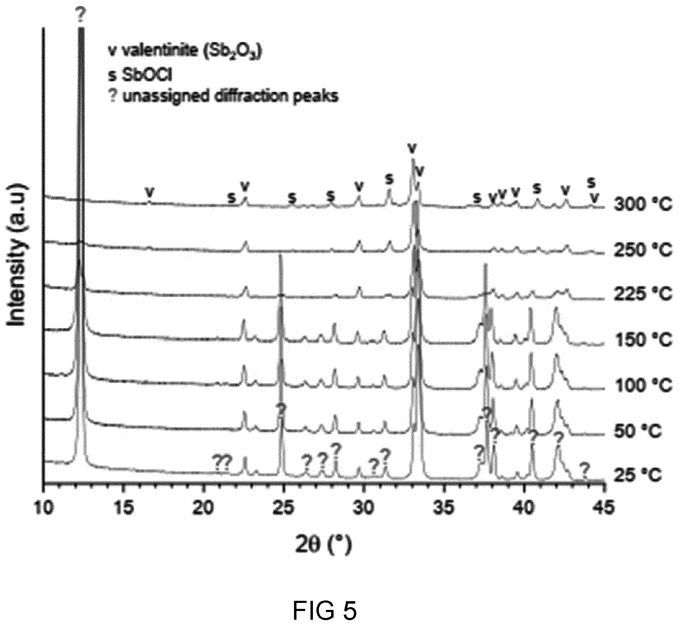

X-ray diffraction of the obtained FR1 precipitate indicated the presence of Sb₂O₃ (valentinite), but another main phase was also present which could not be assigned to a known crystal phase of the ICDD Powder Diffraction database in the X'Pert PANalytical High Score Plus software. XRD diffractograms were taken upon heating the sample to gain further insights in the phase composition (Figure 5).

At about 225 °C a phase change occurred, whereby at increasing the temperature SbOCI was formed. Thus, it can be presumed that the unknown phase contained antimony and chloride. Furthermore, the material contained a considerable amount of phosphorous (0.42 wt%), indicating the presence of Phosflex 362^{®} (2-ethylhexyl diphenyl phosphate) or a derivative thereof. The former has a decomposition temperature of about 240 °C, which could match the observed phase change upon heating in the temperature range 225 °C - 250 °C (Figure 5).

Also, the presence of phthalate additives could not be excluded. Antimony is known to form a myriad of organic complexes, including those with phthalate and phosphate molecules. It is advantageous to remove organic substances from the leachate prior to antimony precipitation to improve the purity of the precipitate and permit identification of the organic additive compounds.

For FR2, which still contained ethanol, upon water addition the pH varied when the solution was left to stand over time and the formed precipitate tended to redissolve. Hence, a considerable amount of water needed to be added (i.e. 6.2:1 V_{water}:V_{FR2}, whereby V_{FR2} >> V_{FR1} as ethanol was not removed). The formed precipitate was difficult to recover by filtration, thus centrifugation was applied to sediment the precipitate and remove the supernatant liquid. After drying, the recovered precipitate form FR2 had an oily appearance. Therefore, the material was washed with n-hexane to remove the oily fraction, which could be present due to the co-extraction of organic additives during ethanolic HCI leaching. This washing step removed most of the solid residue fraction, indicating that antimony precipitation through water addition to FR2 was unsuccessful.

### Process validation

Based on the above findings a process was experimentally tested that took into account (i) the need to have a fine grained PVC sample to increase the antimony extraction yield and (ii) the need to remove co-extracted organic additives from the acid composition prior to antimony recovery to avoid interferences and contaminations during antimony precipitation. During the leaching step 50 g of cryogenic-milled PVC (<4 mm) was leached for 4 h at 80 °C in an ethanolic 4 M HCI solution with L/S = 10. Subsequent steps involved filtration and distillation of the filtrate to remove ethanol. Next, the obtained aqueous phase was washed with n-hexane in a glass separation funnel. After removal of the liquid phases from the separation funnel a brown oily phase stuck to the glass wall, which was collected by rinsing with 2-propanol. Finally, antimony was recovered from the purified aqueous leachate through precipitation by water addition.

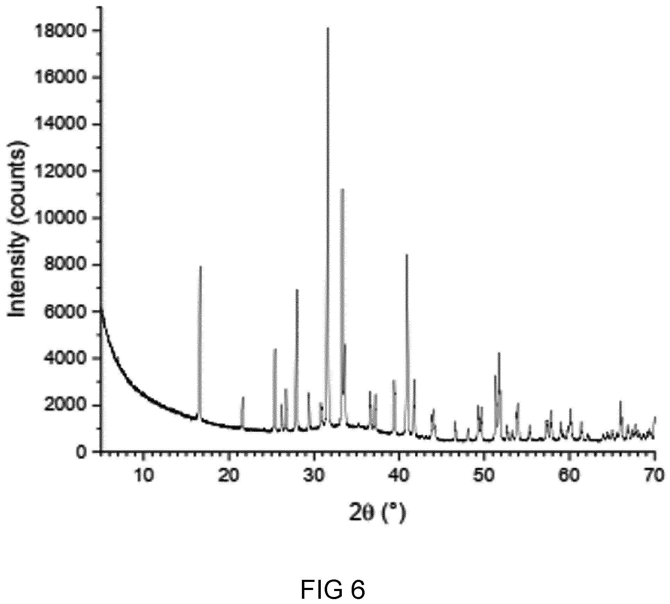

DART-MS analyses were performed on PVC before and after leaching, as well as on the obtained n-hexane and 2-propanol liquid fractions (Table 4). All materials contained organic additives such as dioctyl phthalate and diethyl phthalate, whereas Phosflex 362^{®} was not observed in 2-propanol. Furthermore, possible decomposition products of organic additives were observed in the purified PVC. Although DART-MS is not a quantitative analysis method, it showed that the wash fraction of n-hexane removed organic additives from the aqueous HCI fractions. Subsequent hydrolysis of antimony in the washed HCI aqueous solution (WAS) yielded a precipitate at a 5:1 V_{water}:V_{WAS} addition at which a pH = 0.231 was reached. The mass of the dried precipitate was 2.138 g. The X-ray diffractogram of the obtained precipitate only showed diffraction peaks of the Sb4Cl2O5 phase (Figure 6). Also, the presence of an amorphous phase was observed and could be quantified by Rietveld analysis of the XRD diffractogram as 25.3 wt.% of the total composition.

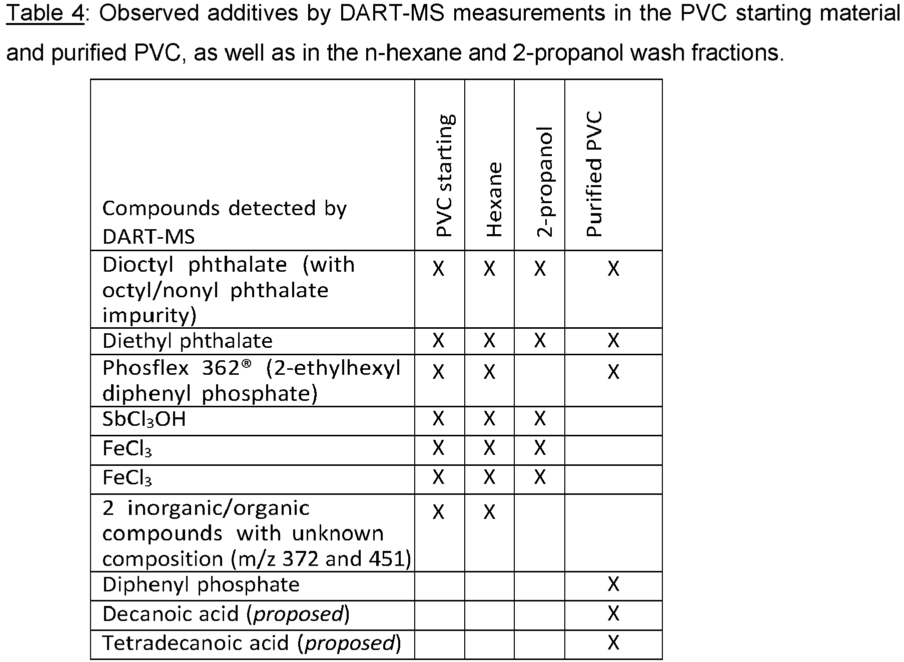

Chemical analysis showed the presence of 730000 mg kg-1 Sb and 110000 mg kg-1 CI, with minor impurities of Al (23 mg kg-1), P (110 mg kg-1), Pb (270 mg kg-1), Si (120 mg kg-1) and Sn (50 mg kg-1). The precipitate also contained 0.8 wt.% carbon and can thus be considered the main impurity. None of the elements Ca, Cr, K, Mg, Na, S or Zn were present in the precipitate. The overall recovery rate of antimony, as mainly Sb4Cl2O5 from the PVC starting material, was 80 wt.%.

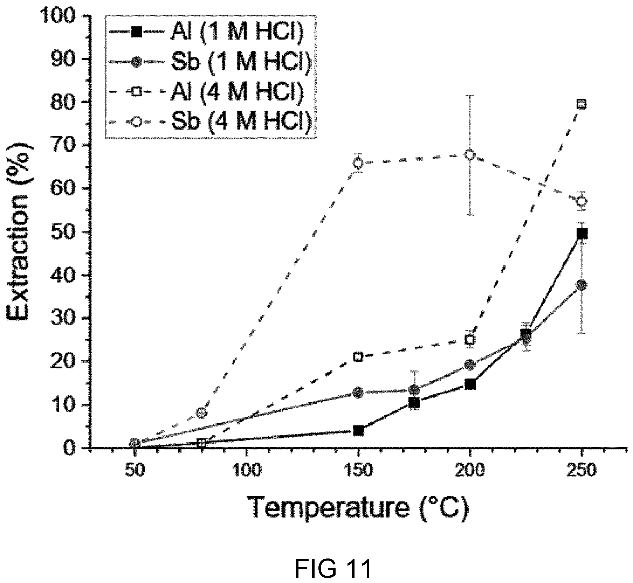

TGA-DSC analyses of the purified PVC gave similar temperature profiles as those of the starting material (Figure 11) and the molar H:C ratio equaled 1.7, indicating that the PVC did not decompose during leaching. Whereas, upon comparison of SEM-EDX analyses of the starting material with leached PVC it is shown that small antimony containing grains were removed, whereas larger aluminium containing grains and intermediate sized silicon containing grains were not removed by leaching with 4 M HCI ethanolic solution (Figures 7A-7H - the top figures on each page (Fig. 7A, 7C, 7E, 7G) were obtained from the untreated PVC material and the bottom figures on each page (Fig. 7B, 7D, 7F,7H) were obtained from PVC material leached for 4 h at 80 °C in ethanolic 4 M HCI).

### References

1. J. N. Hahladakis, C. A. Velis, R. Weber, E. lacovidou and P. Purnell, J Hazard Mater, 2018, 344, 179-199.
2. S. Ugduler, K. M. Van Geem, M. Roosen, E. I. P. Delbeke and S. De Meester, Waste Manag, 2020, 104, 148-182.
3. R. Babinsky, Plastics Additives & Compounding, 2006, DOI: 10.1016/S1464-391X(06)70526-8, 38-40.
4. A. Sevenster, J Mater Cycles Waste Manag, 2012, 14, 281- 285.
5. M. Filella, P. Hennebert, G. Okkenhaug and A. Turner, J Hazard Mater, 2020, 390, 121764.
6. European Commission, Study on the EU's list of Critical Raw Materials - Final Report, 2020.
7. European Commission, Study on the EU's list of Critical Raw Materials (2020) - Critical Raw Materials Factsheets, 2020.
8. D. Dupont, S. Arnout, P. T. Jones and K. Binnemans, Journal of Sustainable Metallurgy, 2016, 2, 79-103.
9. A. Alassali, C. Picuno, H. Samara, S. Diedler, S. Fiore and K. Kuchta, Sustainability, 2019
10. S. Tostar, E. Stenvall, A. Boldizar and M. R. S. Foreman, Waste Management, 2013, 33, 1478-1482.
11. L. Zhan, X. Zhao, Z. Ahmad and Z. Xu, Chemosphere, 2020,245, 125684.

## Claims

1. A process for the recycling of a vinyl chloride polymer material which comprises an initial level of one or more additive compounds, preferably wherein the one or more additive compounds are selected from the group consisting of heavy metals and organic compounds, the process comprising:
- providing an aqueous acid composition comprising one or more alcohols and one or more acids,
- contacting the vinyl chloride polymer material and a volume of the acid composition to cause extraction of the one or more additive compounds from the vinyl chloride polymer material, wherein the acid composition forms a two-phase system with the vinyl chloride polymer material, comprising a solid phase comprising a purified vinyl chloride polymer material and a liquid phase comprising the alcohol, the water, the acid and the extracted one or more additive compounds,
- separating the solid phase comprising the purified vinyl chloride polymer material and the liquid phase comprising the extracted one or more additive compounds.

2. The process according to the previous claim, wherein the acid composition comprises the alcohol and the acid in a volume ratio of the alcohol to the acid composition of at least 5 vol. % with respect to the total volume of the acid composition, preferably at least 7.5 vol. %, more preferably at least 8 vol. %.

3. The process according to claim 1 or 2, wherein the acid composition comprises the alcohol in a volume ratio of minimum 40 vol. % with respect to the total volume of the acid composition, preferably minimum 50 vol. %, more preferably minimum 60 vol. %.

4. The process according to any one of the previous claims, wherein the alcohol is selected from the group of mono-, di or poly hydroxide alcohols.

5. The process according to claim 4, wherein the alcohol is a C1-C8 alkanol, preferably a C1-C5 alkanol, more preferably ethanol.

6. The process according to any one of the preceding claims, wherein contacting of the vinyl chloride polymer material with the volume of the acid composition to cause extraction of the one or more additive compounds from the vinyl chloride polymer is carried out at a temperature of at least 20°C, preferably at least 30°C, more preferably 40°C or more, most preferably 50°C or more, more preferably between 20 and 100°C, most preferably a temperature between 30 and 90°C, in particular a temperature between 40 and 90°C or between 50 and 85°C.

7. The process according to any one of the preceding claims, wherein the acid comprises one or more strong inorganic acids having a pKa value of maximum -2 in water, preferably a strong inorganic acid selected from hydrochloric acid HCI, H₂SO₄, HBr, HI; or one or more strong organic acids having a pKa value of maximum -1.9 in water, preferably selected from p-toluenesulfonic acid, methanesulfonic acid; one or more organic acids selected from oxalic acid, methanoic acid, acetic acid, citric acid; and mixtures of two or more of the afore-mentioned acids, preferably HCI.

8. The process according to any one of the previous claims, wherein the acid is an aqueous solution of the acid of preferably at least 1 M and maximum 12 M, preferably at least 2 M and maximum 10 M, more preferably at least 2 M and maximum 8 M, most preferably between 3.5 and 5.5 M.

9. The process according to any of the preceding claims, wherein the vinyl chloride polymer material is mixed with the acid composition in a mass ratio of the solid polymer material to the acid composition ranging between 1:100 and 1:2, as defined by the mass of vinyl chloride polymer material to the total of acid and vinyl chloride polymer compound, preferably between 1:50 and 1:2, more preferably 1:25 and 1:2.

10. The process according to any of the preceding claims, wherein the one or more additive compounds comprise one or more heavy metals, wherein the one or more heavy metals are selected from the group consisting of antimony, tin, zinc, lead, cobalt, cadmium, aluminium, calcium, sodium, zinc, tin, barium or mixtures of any of these.

11. The process according to any one of the preceding claims, wherein the vinyl chloride polymer material is contacted with a volume of the acid composition in the form of particles, flakes or sheets with a dimension selected within a range from 100 µm to 40 mm, more preferably in a range from 500 µm to 10 mm, most preferably in a range from 1 mm to 5 mm.

12. The process according to any one of the preceding claims, wherein the acid composition and vinyl chloride polymer material are contacted at a time and temperature to reduce the amount of the heavy metals, in particular antimony, by at least 50%, preferably by at least 60%, more preferably by at least 75%, most preferably by at least 90 %.

13. The process according to any of the preceding claims, further comprising subjecting the purified and separated vinyl chloride polymer to a washing step using a washing liquor, preferably an acid, base or water with the purpose of washing remaining acid and/or heavy metal from the purified vinyl chloride polymer.

14. The process according to any of the preceding claims, wherein the vinyl chloride polymer is provided from granulated post-consumer PVC.

15. A secondary vinyl chloride polymer composition comprising virgin vinyl chloride polymer and purified vinyl chloride polymer obtained from the process of any one of claims 1-14.
